# EUROPEAN PATENT SPECIFICATION

(11) **EP 2 475 456 B1**
(45) Date of publication and mention of the grant of the patent: **22.04.2015**
(21) Application number: 10773739.7
(22) Date of filing: 27.08.2010
(51) Int. Cl.: B01J 2/16

(54) **GAS DISTRIBUTION PLATE INTENDED FOR USE IN DEVICES FOR TREATING SOLID PARTICLES**
GASVERTEILUNGSPLATTE FÜR VORRICHTUNGEN ZUR BEHANDLUNG VON FESTSTOFFPARTIKELN
PLAQUE DE DISTRIBUTION DU GAZ DESTINÉE À ÊTRE UTILISÉE DANS DES DISPOSITIFS DE TRAITEMENT DE PARTICULES SOLIDES

(30) Priority: 11.09.2009 SI 200900246
(43) Date of publication of application: 18.07.2012
(73) Proprietor: Brinox, D.O.O., 1215 Medvode (SI)
(72) Inventor: TESLIC, Dusan, 1236 Trzin (SI)
(74) Representative: Pipan, Marjan
(86) International application number: PCT/SI2010/000047
(87) International publication number: WO 2011/031244

(56) References cited:
- DE-A1-102007 025 317
- US-B2- 6 898 869

## Description

The subject of the invention is a gas distribution plate, intended for use in an improved process device for treating solid particles in a fluidised bed, which falls within the field of chemical and pharmaceutical technology. It represents an improvement on the process equipment for treating solid particles by spraying from above, below or from the side and works on the principle of technology with a controlled circular movement of material in the processing chamber. More specifically, the invention relates to a design solution of an essential element of the device for drying, granulating and coating, which improves the quality of these processes. The invention belongs to the A61J3/06 class of the International Patent Classification.

The technical problem successfully resolved by the invention of the device is ensuring product quality during the process of drying, coating, and granulation in a fluidised bed. The drying of moist particles, powder granulation, and coating particles with functional finishes are common technological processes in the chemical, food-processing, and above all, pharmaceutical industry. Especially in the case of coated pharmaceutical products, where the coating thickness, and the uniformity of the coating thickness in each particle, are of crucial importance for achieving the planned release kinetics of the active ingredient inside. While in the case of granulation, it is important that the granules, in addition to the narrow particle size distribution, have the most homogeneous chemical composition. In the case of drying a wet product, it is important that the particles be dried as quickly as possible with the least mechanical damage. The frequency, at which the particles transit through the granulating or coating solution spraying area, strongly influences the above-mentioned attributes of quality in granulating and coating processes. The difference in the frequency at which the particles transit through the solution spraying area results in unevenly coated particles. These differences can be reduced through directed, controlled movement of solid material in a fluidised bed. In this manner, we can also achieve a more efficient process for drying solid particles. Tangential or otherwise directed material movement and mixing in the process chamber for drying, granulating, or coating in a fluidised bed is usually achieved with a special implementation of the process gas distribution plate. There are several types of implementations of distribution plates for achieving controlled, directed material movement in a fluidised bed.

Such a plate with protrusions (gill plate), which is described in the patent document US 5,392,531, is made from a flat plate in which openings are made for the passage of process air or gas. With a view to minimise the leakage of material through the distribution plate, the openings are made so that the cross-section of their orthographic projections are as small as possible or equal to zero. The method of manufacturing such openings is inextricably linked with the appearance of undesired small cracks or nicks on the edges of material that defines these holes.

The bottom of the device described by the patent document EP 0370167 A1 consists of plate piling extending radially and overlapping each other in a circular direction. Process media, usually process air, passes through the openings formed by the overlapping plates at the bottom of process chamber. The overlapping plates are placed approximately horizontally at a slight angle. The result of such placement is material movement in the direction of the plane at the bottom of the chamber. Given the orientation of the overlapping plates, air passing through the plates in to the chamber arrives more or less horizontally in a tangential direction. Consequently, the suspended solid particles in the chamber move in a tangential-horizontal direction. Spray nozzles for the coating solution can be installed at the bottom through the plate piling.

The disadvantage of such a distribution panel is the high cost of manufacture. Another drawback is the use of such a distribution plate with a large diameter. As with the distance from the centre, the width of the distribution plates increases to such an extent that the air passing through the slots, accelerates the particles that are located at the circumference of the plate less than the particles found in area towards the centre of the plate. The problem was solved by enlarging the slots in the area towards the periphery of the drier by increasing the inclination of the plates. The higher inclination of the plates helps increase the resistance against the flow of suspended particles, and thus increases abrasion, which is a highly undesirable phenomenon, especially in pharmacy.

The patent document US 6,705,025 mentions a two-dimensional distribution plate, which with the number and direction of slots allows significantly more variations in the direction of the flow of process air, reduces the abrasion of material, while it is cheaper to manufacture.

Due to technological limitations in making such a distribution plate, the angle of the slots relevant to the plane of the distribution plate is limited. Due to this, the (peripheral) horizontal velocity of the circling material in the chamber is also limited. As it is well known that for the reduction in the variation of lining thickness distribution it is better that the solid particle is exposed to the spray of the coating solution more times in a shorter amount of time than vice versa, and this can be achieved with faster circulating material in the chamber, then the said distribution panel does not represent an optimal solution for the process of coating.

The Patent document US 6,898,869 describes a device for processing powdered materials, which has the bottom of the chamber composed of annular overlapping plates, in between which are slots. Two radial, but oppositely directed flows, meet, with the help of the partition, orient vertically upwards, and merge into one flow. In the area where the flows meet, the spraying of the coating solution takes place with a specially implemented nozzle that takes the form of a slot. Between the overlapping plates, partitions may be placed to achieve directed, controlled movement of the material. The area where the opposing flows meet, divides the chamber into two parts with equal surface areas of the horizontal cross-section. The disadvantage of this geometry is that when the area where the two flows or meet or the spraying area of the coating solution, divides the bottom of the chamber into two parts with equal surface areas, then the particles located on the external side of the spraying area have a higher frequency of passing through the spraying area than the particles located in the centre of the chamber. As it is well known, the frequency of particles passing through the spraying area of the coating solution affects the distribution width of the coating thickness uniformity. It is clear that the differences in the frequency of particle passing from both sides of the chamber through the spraying area of the coating solution can lead to unevenly coated particles.

The presented invention describes the implementation of a distribution plate, which allows the controlled mixing of material in the process chamber in a manner that all particles during coating or granulating are subject to the same spraying conditions, which means that the rate of passing through the spraying area of the coating solution is the same for all particles. The distribution panel allows quick circular movement of material in the chamber, so that the solid particles are exposed to the coating solution spray more times in a shorter period rather than vice versa. This contributes to the higher quality of uniform coating in the event the device is used for process coating. In addition, the implementation of the distribution plate (3) prevents unwanted screening of material into the lower chamber (the area under the distribution plate). The manufacture of such a distribution panel is possible with conventional devices, such as those for working stainless steel sheets, and is relatively quick and inexpensive.

Gas distribution plate 3 by this invention and described in this document is used as an integral part of devices for drying, granulating or coating solid particles or bulk materials. These devices are usually composed of an upper chamber, bordered by an upper chamber wall 1, and of a lower chamber, bordered by a lower chamber wall 2, delimited by a distribution plate 3. The media 9, e.g. process gas or process air, passes into the process chamber through a number of openings at the bottom of process chamber that represent the distribution plate 3. The distribution plate 3, which is the subject of this invention, consists of pieces that have the basic form of circular rings extending radially, so that they overlap each other concentrically. Media 9, e.g. process gas, passes into the upper part of the process chamber through the openings or slots 16, formed as a result of overlap between the solid rings.

Apart from the inner and outer edge of the distribution plate, the plates in the form of rings overlap in a way that each of the bottom plates 6, which form circular rings on the floor plan, is covered with a plate 7 at its inner edge and a plate 7 on its outer edge. Within the area of the floor plan overlapping plates 6 and 7 in the shape of circular rings (the area bordered by two adjacent circular rings) are the barriers 13a, 13b for directing the flow 10 of the media 9. These barriers can be an integral part of the upper plates 6 or the lower plates 7. The flow 10 of the media 9 through the overlapping area at the outer edge, and the flow 11 of the media 9 through the overlapping area at the inner edge of the lower plate 7, are directed towards each other. The joint direction of the media flow on the surface of the distribution plate 3 or in the process chamber is given by the resultant of both mentioned flows 10 and 11. With the proper placement of the barriers 13a and 13b to guide the flows 10 and 11 of the media 9, we can achieve virtually any direction of the flows 10 and 11 of the media 9, and with them the movement of particles in the process chamber. The upper part of the upper plate 7 is implemented in the form of an angle to prevent the retention of material on the surface of the plate 7 during process coating. So that the highest part of the upper plane 14a, 14b is located in the middle of the upper plate 7 and the lowest in the inner and outer edge of the upper plate 7. Part of the lower plate 6 in an area where there is no overlap with the upper plates 7 is implemented so that the highest part of the lower panel 15a, 15b is in an area where there is no overlap between the upper plate 7, located in the middle of the area of the plate 6, while the lowest parts are at the inner and outer edges, which are specified by the floor plan overlapping area of the lower plates 6 by the upper plates 7.

For the better fluidisation of material, additional perforations in the shape of small holes, slots, or grooves can be executed on the plates 6 and/or 7 that compose the distribution plate 3.

The nozzles 4 for spraying solutions or dispersion for coating or granulating bulk material can be placed either through the openings 8 in the distribution plate 3 or through the wall 1 of the upper part of the chamber.

The manufacture of the distribution plate is possible with milling technology, and is relatively quick, simple, and inexpensive.

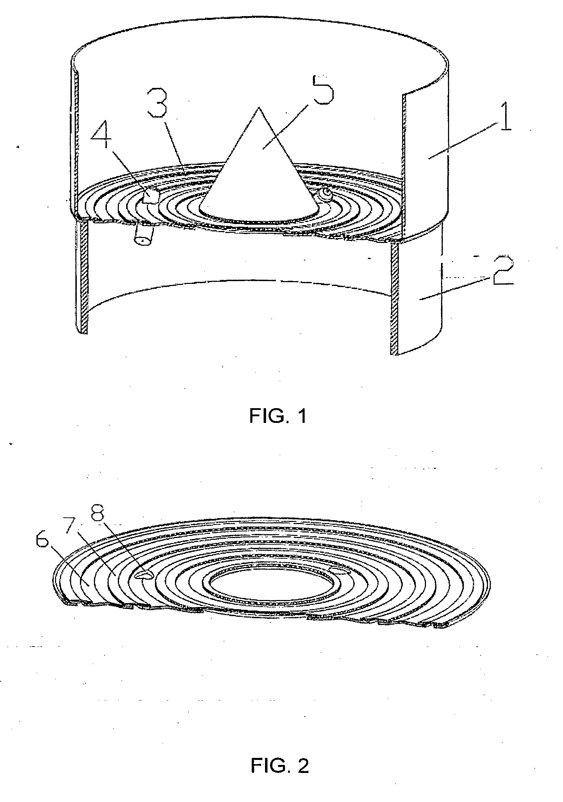

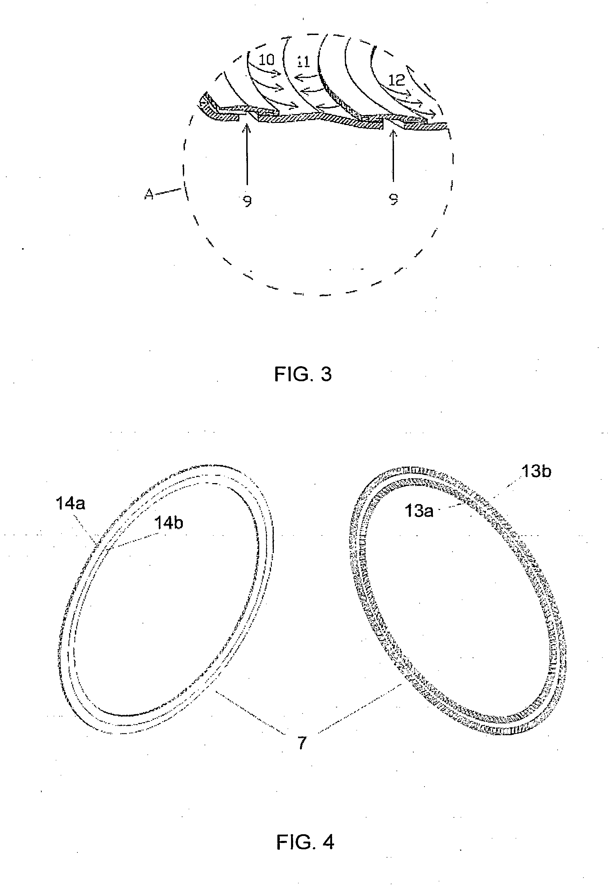

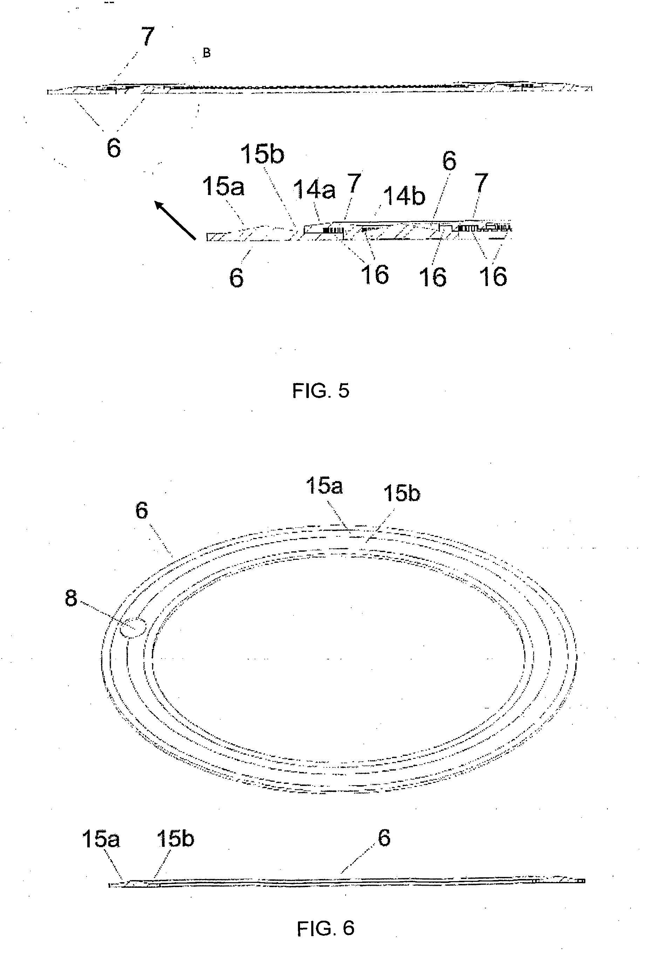

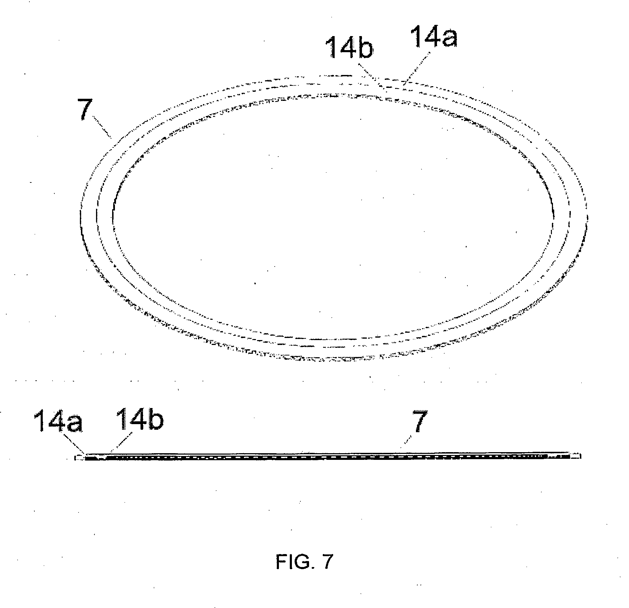

## Claims

1. The distribution plate 3, intended for use in devices for processing solid particles of gas,
**characterized in that**,
composed of several upper plates (7) and lower plates (6) whose floor plan surfaces are ring shaped, for which each upper plate (7) concentrically overlaps part of one or two lower plates (6). Between the upper plates (7) and lower plates (6), barriers (13a, 13b) are placed for directing the flow of the media 9, in such a way, that theses barriers (13a, 13b) together with the plates (6) and plates (7) create numerous openings (16) intended for the passage of the media (9) through this element of the distribution plate (3) so that the media (9) arriving from the areas covered by the outer edge of any of the upper plates (7) have a tangential component of speed opposite to the tangential component of speed of the media (9) arriving from the area covered by the inner edge of any of the upper plates (7).

2. The distribution plate (3) according to claim 1,
**characterized in that**,
the lower plates (6) are implemented so that their upper planes (15a, 15b) are completely or partially implemented under an angle relative to the horizontal plane.

3. The distribution plate (3) according to claims 1 and 2,
**characterized in that**,
the upper plates (7) are implemented so that their upper planes (14a, 14b) are completely or partially implemented under an angle relative to the horizontal plane.

4. The distribution plate (3) according to claims from1 to 3
**characterized in that**,
perforations in the shape of small holes are implemented through part or the entire plates (6) and (7).

5. The distribution plate (3) according to claims from1 to 3
**characterized in that**,
perforations in the shape of slots are implemented through part or the entire plates (6) and (7).

6. The distribution plate (3) according to claims from 1 to 5
**characterized in that**,
it has openings (8) intended for spraying nozzles.

7. The distribution plate (3) according to claims from 1 to 6
**characterized in that**,
the upper plates (7) are implemented so that their upper planes (14a, 14b) are flat.

8. The distribution plate (3) according to claims from 1 to 6,
**characterized in that**,
the lower plates (6) are implemented so that their upper planes (15a, 15b) are flat.

9. The distribution plate (3) according to claims from 1 to 6,
**characterized in that**,
the upper plates (7) are implemented so that their upper planes (14a, 14b) are curved.

10. The distribution plate (3) according to claims from 1 to 3,
**characterized in that**,
the lower plates (6) are implemented so that their upper planes (15a, 15b) are curved.

## Patentansprüche

1. Verteilerplatte (3) für Vorrichtungen zur Behandlung von Gas-Feststoffpartikeln
**dadurch gekennzeichnet, dass**
sie aus mehreren Oberplatten (7) und Unterplatten (6), deren Oberflächen ringförmig sind, zusammengesetzt ist, wobei jede Oberplatte (7) einen Teil der einen oder zwei Unterplatten (6) konzentrisch überlappt, wobei zwischen den Oberplatten (7) und den Unterplatten (6) Sperren (13a, 13b) zur Leitung des Flusses des Mediums (9) derart angeordnet sind, dass diese Sperren (13a, 13b) zusammen mit den Platten (6) und Platten (7) eine Vielzahl von Öffnungen (16) bilden, die dem Durchtritt des Mediums (9) durch dieses Element der Verteilerplatte (3) dienen, sodass das aus der mit dem Außenrand der jeweiligen Oberplatte (7) abgedeckten Region kommende Medium (9) eine tangentiale Geschwindigkeitskomponente aufweist, die entgegengesetzt zur tangentialen Geschwindigkeitskomponente des aus der mit dem Innenrand der jeweiligen Oberplatte (7) abgedeckten Region kommenden Mediums (9) ist.

2. Verteilerplatte (3) nach Anspruch 1,
**dadurch gekennzeichnet, dass**
die Unterplatten (6) derart ausgebildet sind, dass ihre oberen Oberflächen (15a, 15b) im Ganzen oder zum Teil in einem Winkel bezüglich zur Horizontalebene ausgebildet sind.

3. Verteilerplatte (3) nach Ansprüchen 1 und 2,
**dadurch gekennzeichnet, dass**
die Oberplatten (7) derart ausgebildet sind, dass ihre oberen Oberflächen (14a, 14b) im Ganzen oder zum Teil in einem Winkel bezüglich zur Horizontalebene ausgebildet sind.

4. Verteilerplatte (3) nach Ansprüchen 1 bis 3,
**dadurch gekennzeichnet, dass**
über einen Teil oder die Gesamtfläche der Platten (6) und (7) eine Perforierung in Form von kleinen Löchern ausgebildet ist.

5. Verteilerplatte (3) nach Ansprüchen 1 bis 3,
**dadurch gekennzeichnet, dass**
über einen Teil oder die Gesamtfläche der Platten (6) und (7) eine Perforierung in Form von Spalten ausgebildet ist.

6. Verteilerplatte (3) nach Ansprüchen 1 bis 5,
**dadurch gekennzeichnet, dass**
sie Öffnungen (8) für Spritzdüsen aufweist.

7. Verteilerplatte (3) nach Ansprüchen 1 bis 6,
**dadurch gekennzeichnet, dass**
die Oberplatten (7) derart ausgebildet sind, dass ihre oberen Oberflächen (14a, 14b) flach sind.

8. Verteilerplatte (3) nach Ansprüchen 1 bis 6,
**dadurch gekennzeichnet, dass**
die Unterplatten (6) derart ausgebildet sind, dass ihre oberen Oberflächen (15a, 15b) flach sind.

9. Verteilerplatte (3) nach Ansprüchen 1 bis 6,
**dadurch gekennzeichnet, dass**
die Oberplatten (7) derart ausgebildet sind, dass ihre oberen Oberflächen (14a, 14b) gekrümmt sind.

10. Verteilerplatte (3) nach Ansprüchen 1 bis 3,
**dadurch gekennzeichnet, dass**
die Unterplatten (6) derart ausgebildet sind, dass ihre oberen Oberflächen (15a, 15b) gekrümmt sind.

## Revendications

1. Plaque de distribution (3) destinée à être utilisée dans des dispositifs de traitement de particules solides de gaz
**caractérisée en ce que**
elle est constituée de plusieurs plaques supérieures (7) et plaques inférieures (6), dont les surfaces du plan ont une forme annulaire, chaque plaque supérieure (7) enchevauchant de manière concentrique une ou deux plaques inférieures (6), des barrières (13a, 13b) étant disposées entre les plaques supérieures (7) et les plaques inférieures (6) pour diriger l'écoulement du médium (9) de telle façon que ces barrières (13a, 13b) forment ensemble avec les plaques (6) et les plaques (7) une pluralité d'ouvertures (16) prévues pour le passage du medium (9) à travers cet élément de la plaque de distribution (3), afin que le medium (9) provenant des zones couvertes du bord extérieur d'une quelconque des plaques supérieures (7) ait une composante tangentielle de vitesse opposée à la composante tangentielle de la vitesse du medium (9) provenant de la zone couverte par le bord intérieur d'une quelconque des plaques supérieures (7).

2. Plaque de distribution (3) selon la revendication 1
**caractérisée en ce que**
les plaques inférieures (6) sont réalisées de telle façon que leurs plaques supérieures (15a, 15b) sont complètement ou partiellement disposées sous un angle relatif au plan horizontal.

3. Plaque de distribution (3) selon les revendications 1 et 2
**caractérisée en ce que**
les plaques supérieures (7) sont réalisées de telle façon que leurs plaques supérieures (14a, 14b) sont complètement ou partiellement disposées sous un angle relatif au plan horizontal.

4. Plaque de distribution (3) selon les revendications 1 à 3
**caractérisée en ce que**
des perforations ayant la forme de petits trous sont réalisées à travers une partie ou la totalité des plaques (6) et (7).

5. Plaque de distribution (3) selon les revendications 1 à 3
**caractérisée en ce que**
des perforations ayant la forme de fentes sont réalisées à travers une partie ou la totalité des plaques (6) et (7).

6. Plaque de distribution (3) selon les revendications 1 à 5
**caractérisée en ce que**
elle est pourvue d'ouvertures (8) destinées aux buses de pulvérisation.

7. Plaque de distribution (3) selon les revendications 1 à 6
**caractérisée en ce que**
les plaques supérieures (7) sont réalisées de telle façon que leurs plans supérieurs (14a, 14b) sont plats.

8. Plaque de distribution (3) selon les revendications 1 à 6
**caractérisée en ce que**
les plaques inférieures (6) sont réalisées de telle façon que leurs plans supérieurs (15a, 15b) sont plats.

9. Plaque de distribution (3) selon les revendications 1 à 6
**caractérisée en ce que**
les plaques supérieures (7) sont réalisées de telle façon que leurs plans supérieurs (14a, 14b) sont courbés.

10. Plaque de distribution (3) selon les revendications 1 à 3
**caractérisée en ce que**
les plaques inférieures (6) sont réalisées de telle façon que leurs plans supérieurs (15a, 15b) sont courbés.
